# EUROPEAN PATENT SPECIFICATION

(11) **EP 0 745 510 B1**
(45) Date of publication and mention of the grant of the patent: **17.11.1999**
(21) Application number: 96108446.4
(22) Date of filing: 28.05.1996
(51) Int. Cl.: B60Q 1/04, F21Q 1/00, F21M 7/00

(54) **Vehicle lighting unit**
Leuchteinheit für Kraftfahrzeuge
Unité d'éclairage pour véhicule

(30) Priority: 30.05.1995 IT TO950444
(43) Date of publication of application: 04.12.1996
(73) Proprietor: MAGNETI MARELLI S.p.A., 20145 Milano (IT)
(72) Inventor: Toscano, Gioacchino, 10095 Grugliasco (IT); Goraguer, Daniel, 14100 Asti (IT)
(74) Representative: Plebani, Rinaldo

(56) References cited:
- DE-A- 1 904 251
- DE-A- 2 913 045
- DE-A- 3 424 577
- FR-A- 2 664 980

## Description

The present invention relates to a vehicle lighting unit.

More specifically, the present invention relates to a vehicle lighting unit of the type that comprises at least one lamp that in turn comprises a reflector provided with an inward aperture and closed by a transparent cover piece. The unit also comprises a seal inserted between the reflector and a fixed body that supports this reflector, and the structure that supports the seal.

In the majority of applications the seal is an annular seal that is dispensed, and the supporting structure is an annular structure integral with the reflector and moulded simultaneously with the reflector itself. In particular the supporting structure extends out from the opposite side of the reflector relative to the transparent cover piece, surrounds the abovementioned inward aperture, and is defined by two concentric annular walls. These walls are separated from each other and each have free end portions joined to each other by transverse pieces integral with these walls.

Although they are used, the known kinds of lamps described above give problems at the manufacturing stage, and entail comparatively high costs due entirely to the presence and configuration of this supporting structure. This is because the reflector and supporting structure are moulded simultaneously, meaning that both the arrangement and special geometry of the structure demand the use of a mould that is not only comparatively complicated but is also necessarily composed of a plurality of parts or portions brought together to create the two walls and the abovementioned transverse joining pieces.

Furthermore, since in many applications the height, as well as the length, of the supporting structure is considerable and comparable, in some cases, with the depth of the reflector, the structure will contain moulding defects, and even though the mould is made up of a plurality of parts, it is exceedingly difficult not only to extract the moulded detail without breaking and/or cracking or deforming parts of the mould, but also to keep the quality of the moulded product consistently high.

The object of the present invention is to provide a vehicle lighting unit that will solve the problems cited above in a simple and economical manner.

The present invention provides a vehicle lighting unit comprising at least one lamp having a reflector with an inward aperture; a seal designed to be inserted between the reflector and a fixed body that supports the reflector; and connecting means for connecting said seal to said reflector, said connecting means comprising a supporting structure that is integral with said reflector and that at least partly surrounds said aperture; the unit being characterized in that said structure comprises a single solid wall, and a plurality of ribs attached to said solid wall.

The invention will now be described with reference to the accompanying figures, which illustrate a non-restrictive example of its implementation, in which:
Figure 1 illustrates in section a preferred embodiment of the lighting unit according to the present invention fixed to the bodywork of a vehicle;
Figure 2 is a rear view, with certain parts removed for visibility, of the lighting unit shown in Figure 1;
Figure 3 is a perspective view on an enlarged scale of a detail of Figure 2; and
Figures 4 and 5 are perspective views of two different variants of a detail from Figure 3.

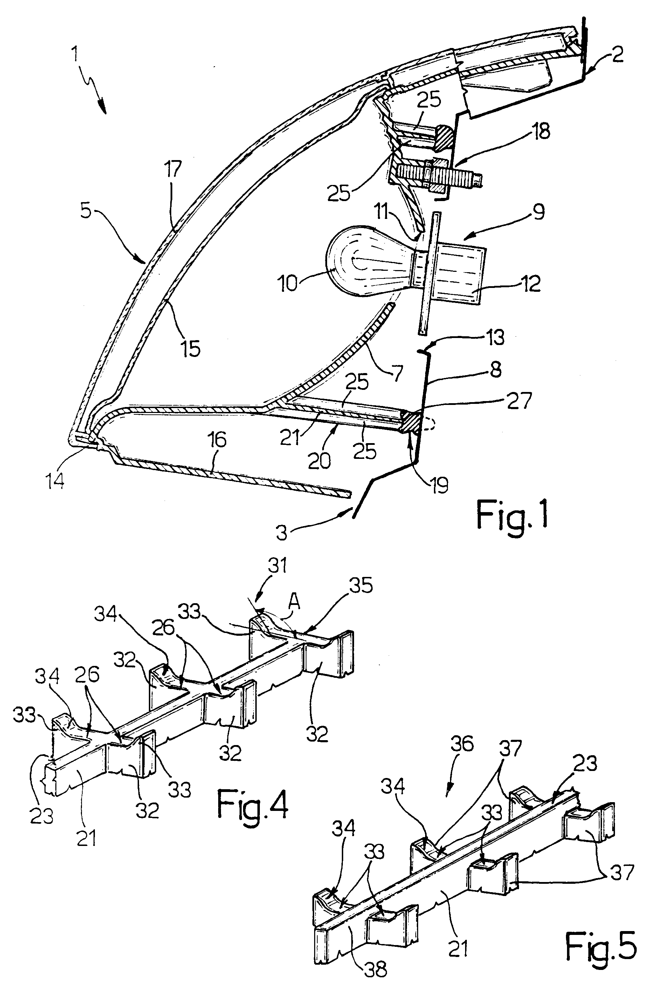

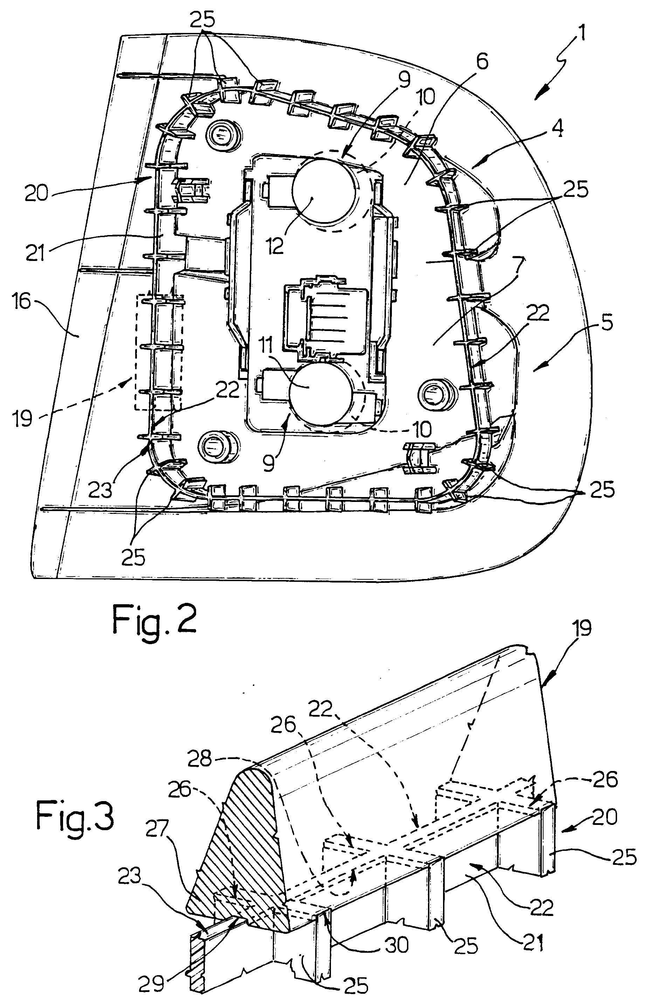

Figures 1 and 2 show a lighting unit 1 fixed to the bodywork 2 of a vehicle 3.

The unit 1 comprises two lamps 4 and 5 of known type - different from each other in the present case - adjacent to each other and each comprising its own known reflector marked 6 and 7. The reflectors 6 and 7 are integral with each other, are made in a single moulding operation and are mounted on a flat wall 8 of the bodywork 2 (Figure 1).

Each reflector 6, 7 houses a lamp 9, the bulb 10 of which projects inside its reflector 6, 7 through a hole 11 formed in an inward portion of the reflector 6, 7, while its base 12 projects through an aperture 13 formed in the wall 8 of the bodywork 2.

The reflectors 6 and 7 each have end portions 14 (Figure 1), to which a transparent dished piece 15 is firmly attached to cover the reflectors 6 and 7 in a known manner, and the reflectors are surrounded by a shaped lateral wall 16. The wall 16 is integral with the portions 14, extends towards the bodywork 2 and is provided, in a known manner, with an additional shaped transparent piece 17 arranged partly over the piece 15, from which it is separated, and partly over the lateral wall 16.

The unit 1 is attached to the bodywork 2 by a plurality of attachment devices 18 (known and not described in detail) and is connected leaktightly to the bodywork 2 by the insertion of an annular seal 19 which is preferably made of an elastomeric material that is compressed, in use, between the bodywork 2 and an annular supporting structure 20, onto which this seal 19 is dispensed.

In particular, as illustrated in Figures 1 and 2, the annular structure 20 is integral with the reflectors 6 and 7 and extends towards the bodywork 2 at approximately right angles to the wall 8 of the bodywork 2, thus surrounding the apertures 11 and also the attachment devices 18. The structure 20 is a moulding, moulded simultaneously with the reflectors 6 and 7 and comprises a single central annular wall 21 which, in cross-section, is rectangular, and is bounded, laterally, by two mutually approximately parallel surfaces 22 and, frontally, by a flat surface 23 approximately perpendicular to the surfaces 22 and parallel with the wall 8.

Still with reference to Figure 1, and with reference to Figure 3, the structure 20 additionally comprises a plurality of pairs of rectangular fins or ribs 25 distributed along the wall 21 and integral both with the wall 21 itself and with the corresponding reflector 6, 7. In particular the ribs 25 of each pair of ribs extend on either side of the wall 21 in line with each other and at right angles to the surfaces 22, and are bounded frontally by respective flat surfaces 26 coplanar with the surface 23. The surfaces 23 and 26 define a flat support for the seal 19, which in cross-section forms an isosceles triangle with rounded corners, and comprises an attachment portion 27 fixed to the structure 20. In particular, with reference to Figure 3, the portion 27 defines a seat 28 comprising a central longitudinal portion 29 and a plurality of transverse portions 30 occupied by an extremity of the wall 21 and by corresponding extremities of the ribs 25, respectively.

The alternative embodiment illustrated in Figure 4 relates to a structure 31 similar to the structure 20 and comprising a plurality of ribs 32. These are distributed along the associated wall 21 in the same way as the ribs 25 and differ from these ribs 25 only in that they each comprise an end tooth 33. Each tooth 33 extends from its surface 26 and is defined, as regards the portion facing towards the tooth 33 of the corresponding rib 32, by an inclined surface 34, forming an obtuse angle A with its surface 26 and with the surface 23. The surfaces 34 define, with the surfaces 23 and 26, a seat 35 for accommodating at least part of the abovementioned attachment portion 27 which, in this embodiment too, encloses the extremities of both the wall 21 and of the ribs 32.

The alternative illustrated in Figure 5 relates to a structure 36 similar to the structure 31 and comprising a plurality of ribs 37 distributed along and connected to the wall 21 in the same way as the ribs 32. They differ from these ribs 32 only in that their surfaces 33 lie on a single plane parallel with the plane of the surface 23 of the wall 21 and set back from this latter plane towards the reflectors 6 and 7. In this embodiment, the wall 21 comprises an annular extremity 38 that projects beyond the surfaces 33 and extends into the seal 19.

It will be clear from the foregoing that the geometrical characteristics of the structures 20, 31 and 36, and in particular the presence of a single central wall 21, represent a considerable simplification, when compared with the prior art, not only of the forming mould, of which it reduces the number of constituent parts, but also of the mould equipment associated with this mould.

Moreover, the presence of a single central wall 21 stiffened only by transverse ribs reduces the amount of material used to form the supporting structure, when compared with known structures, and consequently also reduces the weight and cost of the lighting unit.

What is more, the simple design of the moulds solves the problems of broken and/or cracked moulds and, at the same time, results in components that are practically free of moulding or other defects, e.g. geometrical defects; it is therefore possible to reduce the number of rejects and significantly to improve the quality of the moulded product when compared with known production methods.

It will also be clear from the above that modifications to and variants of the unit 1 are possible without departing from the protective scope of the present invention. In particular, one of the two lamps 4 and 5 could be dispensed with, and the various structures 20, 31 and 36 described could be shaped so as to surround the inward aperture 11 of the remaining reflector 6, 7 and the attachment devices 18 of the remaining lamp 4, 5. In all cases the structures 20, 31 and 36 could be shaped in such a way as to surround only the inward apertures 11 of the reflectors 6 and 7 and to leave on the outside the devices 18 attaching the reflectors 6 and 7 to the bodywork 2. Again, the structures 20, 31 and 36 need not be annular structures and could be shaped in such a way as only partly to surround the apertures 11 and the devices 18.

The ribs 25, 32 and 37 could also be arranged in different positions from those described and, in particular, could all be arranged, for example, on the same side of the annular wall 21, and the ribs 25, 32 and 37 could be integral only with the reflector 6, 7 or, alternatively, only with the wall 21. Nor do the ribs 25, 32 and 37 have to extend at least partly on the inside of the seal 19 but could simply define a support for the seal 19. Again, the ribs 25, 32 and 37 could be dissimilar from each other and from those described by way of example, in terms of shape and dimensions.

Lastly, the seal 19 could be of a different shape from that described and need not necessarily be a dispensed seal.

## Claims

1. Vehicle lighting unit (1) comprising at least one lamp (4)(5) having a reflector (6)(7) with an inward aperture (11); a seal (19) designed to be inserted between the reflector (6)(7) and a fixed body (2) that supports the reflector (6)(7); and connecting means (20; 31; 36) for connecting said seal (19) to said reflector (6)(7), said connecting means comprising a supporting structure (20; 31; 36) that is integral with said reflector and that at least partly surrounds said aperture (11); the unit being characterized in that said structure (20; 31; 36) comprises a single solid wall, and a plurality of ribs (25; 32; 37) attached to said solid wall (21).

2. Unit according to Claim 1, characterized in that said solid wall (21) is an annular wall that completely surrounds said inward aperture (11).

3. Unit according to Claim 1 or 2, characterized in that said solid wall (21) and said ribs (25; 32; 37) are defined, at least partly, by a first flat frontal surface (23) and by second flat frontal surfaces (26; 33) respectively; said first (23) and second (26; 33) frontal surfaces defining a support for said seal (19).

4. Unit according to Claim 3, characterized in that said first (23) and second (26) flat frontal surfaces are coplanar with each other.

5. Unit according to Claim 3, characterized in that the first frontal surface (23) and said second frontal surfaces (33) lie on respective planes parallel with each other and transversely separated from each other.

6. Unit according to any one of the previous claims, characterized in that the seal (19) comprises an attachment portion (27) and in that said solid wall (21) and said ribs (25; 32; 37) define between themselves a seat (35) for housing at least part of said attachment portion (27).

7. Unit according to any one of the previous claims, characterized in that said seal (19) has a housing seat (28) for accommodating at least an extremity of said solid wall (21).

8. Unit according to Claim 7, characterized in that said housing seat (28) comprises a plurality of portions (30) for accommodating corresponding extremities of said ribs (25; 32; 37).

9. Unit according to any one of the previous claims, characterized in that said ribs (25; 32; 37) extend laterally on either side of said solid wall (21).

10. Unit according to any one of the previous claims, characterized in that said supporting structure (20; 31; 36) comprises a plurality of pairs of said ribs (25; 32; 37) distributed along the solid wall (21); the ribs (25; 32; 37) of each pair of ribs being in line with each other and extending on either side of the solid wall (21) at right angles to said solid wall (21).

11. Unit according to any one of the previous claims, characterized in that said ribs (25; 32; 37) are integral with said solid wall (21) and with said reflector (6)(7).

12. Unit according to any one of the previous claims, characterized in that said seal (19) is made of a dispensed elastomeric material.

13. Unit according to any one of the previous claims, characterized in that it also comprises at least one other lamp (4)(5) adjacent to said lamp and comprising its own reflector (6)(7) provided with an inward aperture (11); said supporting structure (20; 31; 36) being integral with both of said reflectors (6)(7) and surrounding both of said inward apertures (11).

## Patentansprüche

1. Fahrzeugbeleuchtungseinheit (1), mit wenigstens einer Leuchte (4, 5), die einen Reflektor (6, 7) mit einer inneren Öffnung (11) besitzt; einer Dichtung (19), die zwischen dem Reflektor (6, 7) und einem befestigten Körper (2) eingesetzt ist, der den Reflektor (6, 7) unterstützt; und einer Verbindungseinrichtung (20; 31; 36) zum Verbinden der Dichtung (19) mit dem Reflektor (6, 7), wobei die Verbindungseinrichtung versehen ist mit einer Unterstützungsstruktur (20; 31; 36), die in Baueinheit mit dem Reflektor ausgebildet ist und wenigstens teilweise die Öffnung (11) umgibt; wobei die Einheit dadurch gekennzeichnet ist, daß die Struktur (20; 31; 36) eine einzelne feste Wand und mehrere Rippen (25; 32; 37) umfaßt, die an der festen Wand (21) angebracht sind.

2. Einheit nach Anspruch 1, dadurch gekennzeichnet, daß die feste Wand (21) eine ringförmige Wand ist, die die innere Öffnung (11) vollständig umgibt.

3. Einheit nach Anspruch 1 oder 2, dadurch gekennzeichnet, daß die feste Wand (21) und die Rippen (25; 32; 37) wenigstens teilweise durch eine erste flache Vorderfläche (23) und durch zweite flache Vorderflächen (26; 33) definiert sind; wobei die ersten (23) und zweiten (26; 33) Vorderflächen einen Träger für die Dichtung (19) definieren.

4. Einheit nach Anspruch 3, dadurch gekennzeichnet, daß die ersten (23) und zweiten (26) flachen Vorderflächen in einer gemeinsamen Ebene liegen.

5. Einheit nach Anspruch 3, dadurch gekennzeichnet, daß die erste Vorderfläche (23) und die zweiten Vorderflächen (33) in entsprechenden Ebenen parallel zueinander und seitlich voneinander getrennt liegen.

6. Einheit nach irgendeinem der vorangehenden Ansprüche, dadurch gekennzeichnet, daß die Dichtung (19) einen Befestigungsabschnitt (27) umfaßt und die feste Wand (21) und die Rippen (25; 32; 37) zwischen sich einen Sitz (35) definieren zum Aufnehmen wenigstens eines Teils des Befestigungsabschnitts (27).

7. Einheit nach irgendeinem der vorangehenden Ansprüche, dadurch gekennzeichnet, daß die Dichtung (19) einen Gehäusesitz (28) zum Aufnehmen wenigstens eines Ausläufers der festen Wand (21) besitzt.

8. Einheit nach Anspruch 7, dadurch gekennzeichnet, daß der Gehäusesitz (28) mehrere Abschnitte (30) zum Aufnehmen entsprechender Ausläufer der Rippen (25; 32; 37) umfaßt.

9. Einheit nach irgendeinem der vorangehenden Ansprüche, dadurch gekennzeichnet, daß die Rippen (25; 32; 37) sich auf einer Seite der festen Wand (21) seitlich erstrecken.

10. Einheit nach irgendeinem der vorangehenden Ansprüche, dadurch gekennzeichnet, daß die Unterstützungsstruktur (20; 31; 36) mehrere Paare der Rippen (25; 32; 37) umfaßt, die längs der festen Wand (21) verteilt sind; wobei die Rippen (25; 32; 37) jedes Paares von Rippen zueinander in Linie angeordnet sind und sich auf einer Seite der festen Wand (21) in rechten Winkeln zur festen Wand (21) erstrecken.

11. Einheit nach irgendeinem der vorangehenden Ansprüche, dadurch gekennzeichnet, daß die Rippen (25; 32; 37) in Baueinheit mit der festen Wand (21) und mit dem Reflektor (6, 7) ausgebildet sind.

12. Einheit nach irgendeinem der vorangehenden Ansprüche, dadurch gekennzeichnet, daß die Dichtung (19) aus einem aufgetragenen Elastomer-Material gefertigt ist.

13. Einheit nach irgendeinem der vorangehenden Ansprüche, dadurch gekennzeichnet, daß sie ferner versehen ist mit wenigstens einer anderen Leuchte (4, 5) neben der Leuchte und ihren eigenen Reflektor (6, 7) besitzt, der mit einer inneren Öffnung (11) versehen ist; wobei die Unterstützungsstruktur (20; 31; 36) in Baueinheit mit beiden Reflektoren (6, 7) ausgebildet ist und beide inneren Öffnungen (11) umgibt.

## Revendications

1. Unité d'éclairage pour véhicule (1) comportant au moins une lampe (4) (5) ayant un réflecteur (6) (7) muni d'une ouverture intérieure (11) ; un joint (19) conçu pour venir s'insérer entre le réflecteur (6) (7) et un corps fixe (2) qui supporte le réflecteur (6) (7); et des moyens de liaison (20 ; 31 ; 36) pour relier ledit joint (19) audit réflecteur (6) (7), lesdits moyens de liaison comportant une structure de support (20 ; 31 ; 36) qui forme une seule pièce avec ledit réflecteur et qui entoure au moins partiellement ladite ouverture (11) ; l'unité étant caractérisée en ce que ladite structure (20 ; 31 ; 36) comporte une paroi pleine unique, et une pluralité de nervures (25 ; 32 ; 37) fixées à ladite paroi pleine (21).

2. Unité selon la revendication 1, caractérisée en ce que ladite paroi pleine (21) est une paroi annulaire qui entoure complètement ladite ouverture intérieure (11).

3. Unité selon la revendication 1 ou 2, caractérisée en ce que ladite paroi pleine (21) et lesdites nervures (25 ; 32 ; 37) sont définies, au moins partiellement, par une première surface frontale plate (23) et par des secondes surfaces frontales plates (26 ; 33), respectivement; lesdites première (23) et secondes (26 ; 33) surfaces frontales définissant un support pour ledit joint (19).

4. Unité selon la revendication 3, caractérisée en ce que lesdites première (23) et secondes (26) surfaces frontales plates sont coplanaires.

5. Unité selon la revendication 3, caractérisée en ce que la première surface frontale (23) et lesdites secondes surfaces frontales (33) se trouvent dans des plans respectifs mutuellement parallèles et séparés transversalement.

6. Unité selon l'une quelconque des revendications précédentes, caractérisée en ce que le joint (19) comporte une partie de fixation (27) et en ce que ladite paroi pleine (21) et lesdites nervures (25 ; 32 ; 37) définissent entre elles un siège (35) destiné à recevoir au moins une partie de ladite partie de fixation (27).

7. Unité selon l'une quelconque des revendications précédentes, caractérisée en ce que ledit joint (19) comporte un siège de montage (28) destiné à recevoir au moins une extrémité de ladite paroi pleine (21).

8. Unité selon la revendication 7, caractérisée en ce que ledit siège de montage (28) comporte une pluralité de parties (30) destinées à recevoir les extrémités correspondantes desdites nervures (25 ; 32 ; 37).

9. Unité selon l'une quelconque des revendications précédentes, caractérisée en ce que lesdites nervures (25 ; 32 ; 37) s'étendent latéralement de chaque côté de ladite paroi pleine (21).

10. Unité selon l'une quelconque des revendications précédentes, caractérisée en ce que ladite structure de support (20 ; 31 ; 36) comporte une pluralité de paires desdites nervures (25 ; 32 ; 37) réparties le long de la paroi pleine (21) ; les nervures (25 ; 32 ; 37) de chaque paire de nervures étant alignées les unes avec les autres et s'étendant de chaque côté de la paroi pleine (21) à angle droit par rapport à ladite paroi pleine (21).

11. Unité selon l'une quelconque des revendications précédentes, caractérisée en ce que lesdites nervures (25 ; 32 ; 37) formant une même pièce avec ladite paroi pleine (21) et avec ledit réflecteur (6) (7).

12. Unité selon l'une quelconque des revendications précédentes, caractérisée en ce que ledit joint (19) est formé en un matériau élastomérique dispensé.

13. Unité selon l'une quelconque des revendications précédentes, caractérisée en ce qu'elle comporte aussi au moins une autre lampe (4) (5) adjacente à ladite lampe et comportant son propre réflecteur (6) (7) muni d'une ouverture intérieure (11); ladite structure de support (20 ; 31 ; 36) formant une même pièce avec lesdits deux réflecteurs (6) (7) et entourant lesdites deux ouvertures intérieures (11).
